# EUROPEAN PATENT SPECIFICATION

(11) **EP 1 569 385 B1**
(45) Date of publication and mention of the grant of the patent: **21.06.2006**
(21) Application number: 04004590.8
(22) Date of filing: 27.02.2004
(51) Int. Cl.: H04L 12/28, H04L 12/413

(54) **Method and system for the improvement of the QoS support in the de-centrally organized wireless networks**
Verfahren und System zur Verbesserung der QoS-Unterstützung in dezentral organisierten Mobilfunknetzen
Procédé et système pour améliorer le support de QoS dans des réseaux sans fil organisé en mode décentralisé

(43) Date of publication of application: 31.08.2005
(73) Proprietor: SIEMENS AKTIENGESELLSCHAFT, 80333 München (DE)
(72) Inventor: Lott, Matthias, 82061 Neuried (DE)

(56) References cited:
- WO-A-02/078229
- MANGOLD S ET AL: "IEEE 802.11e Wireless LAN for Quality of Service" COMNETS RWTH AACHEN UNIV. OF TECHNOLOGY, February 2002 (2002-02), pages 1-8, XP002251598
- CHUN-TING CHOU ET AL: "Inter-frame space (IFS) based service differentiation for ieee 802.11 wireless LANs" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 October 2003 (2003-10-06), pages 1412-1416, XP010702439 ISBN: 0-7803-7954-3
- MANGOLD S ET AL: "IEEE 802.11e - fair resource sharing between overlapping basic service sets" COMNETS RWTH AACHEN UNIV. OF TECHNOLOGY, vol. 1, 15 September 2002 (2002-09-15), pages 166-171, XP010614208

## Description

### Field of the invention

The present invention relates to a method and a system for improving the QoS support in mobile communication environments, especially ones where legacy stations are present.

### Background of the Invention

Support of Quality of Service (QoS) is important for mobile communication systems as they support not only best-effort traffic but also real-time services like data streaming or voice-over-IP (VOIP). To comply with this evolution the standard IEEE 802.11e is specified to enhance the capabilities and efficiency of the current IEEE 802.11 WLAN protocol by extending support for applications with Quality of Service (QoS) requirements.
In systems that do not have an access point (AP), IEEE 802.11 (ANSI/IEEE Std 802.11, 1999 Edition) specifies the Distributed Coordination Function (DCF) for the management of the channel access. For stations that have Quality of Service (QoS) requirements, IEEE 802.11e specifies the Enhanced Distributed Coordination Function (EDCF). This scheme is known to have drawbacks under certain operation conditions, as stated in "IEEE 802.11e Wireless LAN for Quality of Service" by S. Mangold et al, in Proc. European Wireless '02, Florence, Italy, Feb. 2002. Specifically, when legacy stations are present in the system, the proposed Enhanced Distributed Coordination Function (EDCF) cannot fulfil guaranteed Quality of Service (QoS) requirements and the background traffic influences the performance of high-priority users, like in the case of collisions due to competing stations transmitting at the same time. In view of the above, two solutions have been proposed that try to overcome the problem. One is based on the IEEE 802.11e standard and the other on the ETSI HIPERLAN type 1 standard. A short discussion of the two existing solutions follows.

### IEEE 802.11e solution

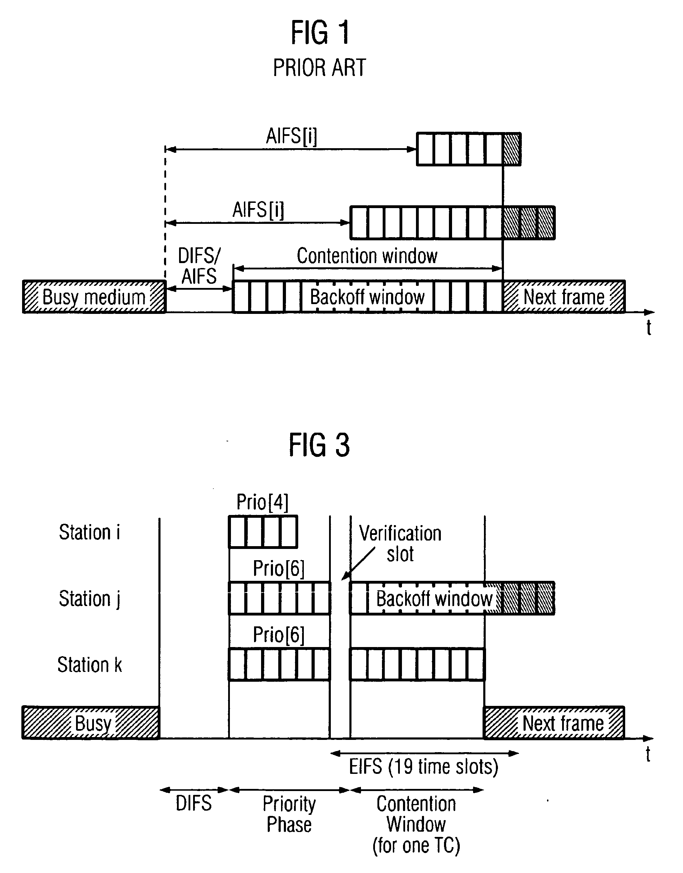

In order to support multimedia services (voice, audio, video) with Quality of Service (QoS) requirements over a wireless LAN, the IEEE 802.11e draft defines extensions to the Distributed Coordination Function (DCF) and the Point Coordination Function (PCF). For the ad hoc operation the Enhanced Distributed Coordination Function (EDCF) provides differentiated Distributed Coordination Function to the wireless medium for prioritized traffic categories (TCs). Up to 8 traffic categories (TCs) are supported. An EDCF station will have at most 8 prioritized output queues, one for each TC. A station may also implement fewer than 8 physical queues and provide a mapping from traffic categories to the available queues. Each station competes for transmission opportunities using an EDCF wherein the minimum specified idle duration time is a distinct value AIFS[TC] (Arbitration Inter Frame Space), rather than DIFS (DCF Inter Frame Space) and employs a TC specific contention window CWmin[TC] rather than CWmin. The values for the AIFS and CWmin[TC] are assigned to each TC by default. In the IEEE802.11e standard, the AIFS can be of different length, as this is a parameter that can be varied depending on the TC. Fig. 1, gives an example of two TCs (i and j) and the procedure used to avoid collisions.
Collisions between competing queues within a station are resolved within the station such that the higher priority queue receives the transmission opportunity and the lower priority colliding queue or queues behave as if there were an external collision on the wireless medium. To calculate the backoff time the same methods as for the DCF are used, but the calculation starts from the differentiated intervals [1, CW[i]+1] and the new value for CW[i] in the event of a collision is computed by means of a specific CW persistence factor (CWPF[i] resulting in different increments for the TCs.
Though the proposed QoS support of the IEEE 802.11e can improve the prioritization of the different traffic streams, the protocol overhead introduced due to the AIFS is considerably large, especially, if the impact of the lower priority streams should be low. Furthermore, if legacy stations are operating in parallel they do not know of AIFS. Since these stations will not wait AIFS but DIFS, all legacy stations will contend with the highest priority. Once, the idle period has elapsed all stations will begin the back-off procedure. Additionally, even with EDCF stations there is an impact of stations with lower priority TCs on the throughput of stations with higher TCs as far as the AIFS plus the backoff size exceeds the AIFS value of the lower priority.

### HIPERLAN type 1 solution

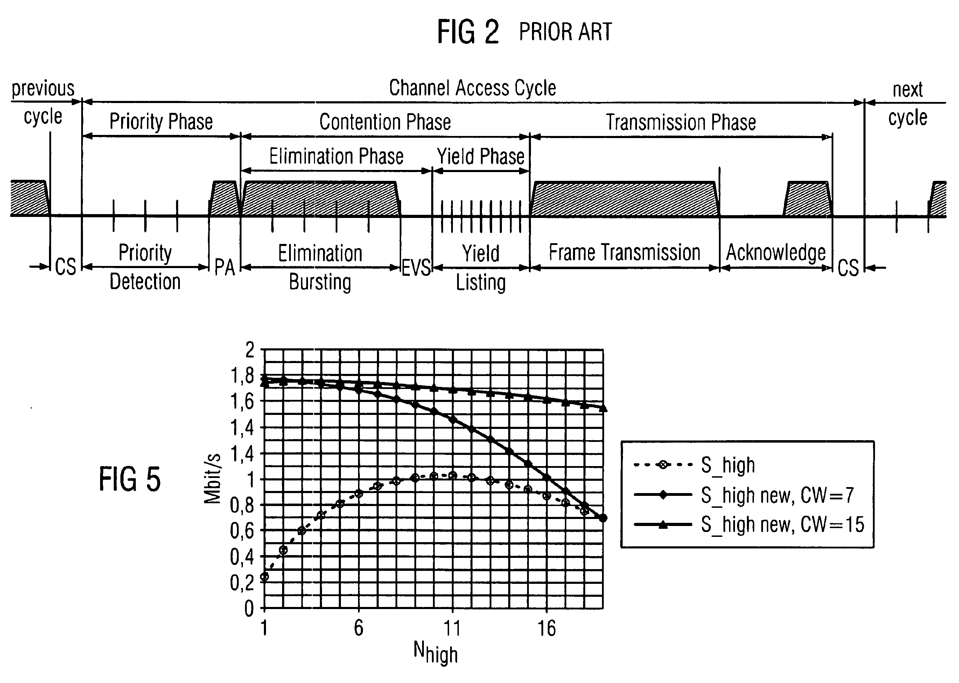

In the HIPERLAN type 1 (H/1) standard (High Performance Radio Local Area Network (HIPERLAN) Type 1; Functional specification EN300652 V 1.2.1, July 1998), an access scheme called Elimination-Yield Non-Pre-emptive Priority Multiple Access (EY-NPMA) is specified that allows for prioritization of traffic. In H/1 a channel access cycle (shown in Fig.2), the cycle is comprised of three phases: prioritization, contention, and transmission.
During the prioritization phase, all stations that do not currently have the highest priority are singled out. In (H/1) priority levels are numbered 0 to m_{cp}-1, with 0 denoting the highest priority level. If the packet to be transmitted has channel-access priority n, the station listens to the channel during n priority slots. If the channel is sensed idle in the n prioritization slot intervals, the node asserts the channel access priority by transmitting immediately a channel access burst for the duration of the priority assertion interval n+1th slot (PA), and it is admitted to the contention phase.

Otherwise, it stops contending and waits for the next channel access cycle.
The contention phase starts immediately after the priority assertion interval (PA) and consists of a further two phases: elimination and yield. During the elimination phase each station transmits an elimination burst for a number b of elimination slots, the number b lies in the interval [0, m_{ES}] which is determined according to a truncated geometric probability distribution. After the end of the elimination burst transmission, each station senses the channel for the duration of the elimination survival verification slot (ESV).

If the channel is sensed idle, the station starts immediately with the yield phase, which consists of a number d of yield slots before beginning transmission, as long as the channel was idle during the whole yield phase. The number d, follows a uniform distribution in the interval [0, m_{YS}] with equal likelihood. If during this yield phase the channel is not idle the station yields to the other contending stations and withdraws from the channel accessing procedure in the current channel access cycle.

The EY-NPMA scheme does support prioritization, however it is very complicated, introduces a large overhead and can't be introduced in current access scheme of IEEE 802.11. Hence it is not suitable as an extension for it, and thus has not been taken into account in the IEEE 802.11e.

As it can be seen from the above solutions, there exists a requirement for a method and a system that can allow quality of service (QoS) requirements to be fulfilled and to eliminate background traffic influences in a mobile communications environment. It is therefore an object of the invention to solve the above mentioned problems. This object is achieved by the method according to claim 1, the system claim 14 and the station claim 25.

Depending on the priority of the data a station has to transmit, it transmits a signal when it senses that the transmission medium is free. The higher the priority the longer the duration of the signal. Stations that sense that the transmission medium is active during this time, will not try to transmit. In this way the station with the highest priority will gain access to the medium and transmit its data. The advantage of this invention over the existing prior art is that by use of this transmitted signal, stations with high priority data will always get access to the medium and avoid background traffic influences.

### Short description of the drawings

Fig. 1 shows the procedure used in order to avoid collisions, in the IEEE 802.11e standard.
Fig. 2 shows the procedure used in order to avoid collisions, in the HIPERLAN type 1 (H/1) standard.
Fig. 3 shows the improved procedure used in order to avoid collisions, according to the invention.
Fig. 4 shows the algorithm of the proposed scheme.
Fig. 5 shows a comparison of throughput as a function of high-priority stations, between the IEEE 802.11e and the improved accessing schemes.

### Detailed description of the invention

In view of the problems that exist with the aforementioned prior art solutions, a novel access scheme for the IEEE 802.11 standard is necessary, which can support Quality of In this access scheme, which comprises a prioritization and a contention phase, stations in a wireless network environment (fixed or mobile) that support traffic streams (voice, audio, video, data) with special priority requirements, will send out signals onto the radio medium (channel) after a pre-defined idle period following a preceding packet transmission. This pre-defined idle period is equal to the DCF Inter Frame Space (DIFS), in order to be compliant with legacy terminals / systems. The time interval between frames is defined as an Inter Frame Space (IFS). The different Inter Frame Spaces are defined in the IEEE 802.11 standard as time gaps on the radio medium and are fixed. One such gap is the above mentioned DIFS and another is the Extended IFS (EIFS). EIFS are used to allow ongoing transmissions to continue and end successfully even though another station (that back-offs for the duration of EIFS) has not received the transmission (e.g. it could not decode the message). In the IEEE 802.11 standard the EIFS shall be used by the DCF whenever the PHY has indicated to the MAC that a frame transmission begun that did not result in the correct reception of a complete MAC frame with a correct frame check sequence values. The EIFS interval shall begin following indication by the PHY that the medium is idle after detection of the erroneous frame. The higher the priority is, the longer the signal is transmitted by the station or stations. The number of slots that are used for the signal transmission is determined by the priority of the traffic stream. With a priority *l* ∈ [1;L], where L is the highest priority, a station will transmit the signal for a duration of *l×t*_{*slot*}*.* E.g. for a priority level of 3 the station will transmit a signal with a duration equal to 3 time slots. The signals are any type of signals with a pre-defined duration equal to one time slot as defined in the IEEE 802.11 standard. They can be a fraction of an RTS (request to send control frame) or CTS (clear to send control frame) signal or any other coded / modulated signal, or simply a jamming signal, which fits the spectrum requirements (spectrum mask) and maximum EIRP for the target frequency range (e.g. ISM band). After transmitting their respective signals, the stations will listen to the radio medium during one further time slot (Verification Slot (VS)) in order to verify the radio medium. If the medium is idle the stations will begin the back-off procedure, as defined in the IEEE 802.11 standard, in order to avoid instabilities in the system. If the medium is busy because of a signal that is still being transmitted, the stations resign to transmit and will re-try during the next access cycle.
The station with the highest priority will occupy the radio medium for the longest time and will survive this prioritization phase. Hence stations with the highest priority will always gain access to the radio medium over stations with lower priorities. In the contention phase, only the station with the randomly selected lowest back-off will start to transmit a packet first. This avoids contention between stations that have the same priority and thus have won the prioritization phase.

### Preferred Embodiment

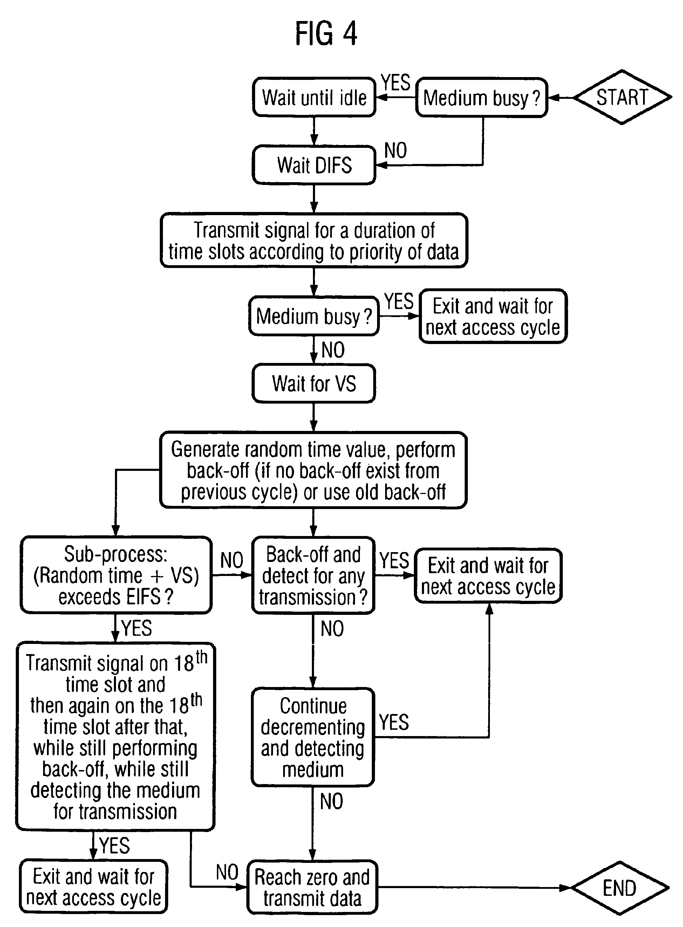

In Fig. 3, a more detailed description of the mechanism of the improved access scheme is shown. In the example, three stations (i, j, k) with corresponding traffic class priorities (4, 6, 6) are competing for access to the radio medium. Once the radio medium is idle, i.e. a preceding packet transmission has ended, all three stations will wait for DIFS and then they will start to transmit onto the medium an signal, to begin the prioritization phase. The duration of each station's signal depends on the priority of the traffic class. Once the signal has been transmitted the stations will sense the medium to see if it is idle or not. It can be clearly seen in Fig. 3, that station i which has a traffic class priority 4 will end its signal transmission first as its signal will have a shorter duration. Station i therefore will sense that the radio medium is still busy and so will resign to transmit and will defer re-trying until the medium has been idle for DIFS.
Stations j and k, which have the same traffic class priority will continue to transmit until the duration of their signal ends. Once they have ended transmission they will sense the medium to ascertain if it is idle or not. In this case, as the medium is idle, they will then wait for a further time slot the Verification Slot (VS) in order to verify that the medium still remains idle. This completes the prioritization phase of the access scheme, and its duration is variable in length as it depends on the current priority of the traffic class that is being served.
After the prioritization phase, all stations that have the same traffic class priority will compete for the medium during the contention phase, in this case stations j and k. To avoid instabilities in the system the negative back-off scheme as defined in IEEE 802.11 is used. When generating the random time value the station will run a sub-process which calculates the time it will take before it can start transmitting, if the duration exceeds the duration of the Extended IFS (EIFS), which is of a length of 19 time slots, then the station will transmit another signal in the 18^{th} time slot after the back-off procedure has started (equal to 360µs of idle time taking into account the VS as well). If the time calculated is also equal to 19 time slots, then also a signal is transmitted. This is done in order to avoid any contention issues with stations that have lower priorities or no priorities at all. Such stations do not decrement their back-off timers, they simply wait EIFS after the signal of the station with the highest priority has ended. In this way, such stations will have to wait again for EIFS before transmitting, giving time for the station backing-off, to finish its back-off procedure. Afterwards the station continues with the back-off procedure and repeats this step after the back-off counter has been decremented by a further 18 time slots. This repetition, re-freshes the exclusion of those stations that have been excluded from contention during the prioritization phase after DIFS. By use of this feature, the signal, which could be any signal that generates some noise on the receiver, will cause the back-off of all stations for at least a duration of EIFS. This time is needed to successfully accomplish the back-off procedure for the active stations with the same priority and with data waiting to be transmitted.
The station that has the lowest randomly selected back-off, between stations j and k will transmit first, once the back-off counter reaches zero. In this way contention and collisions are avoided. The station that doesn't have the lowest back-off will sense that the medium is busy and will resign to transmit and wait for the next access cycle. When the next access cycle begins it will not generate a new random back-off, but will use the one it already has and which has been already decremented from the previous cycle. In this way a station with a high priority that has had to resign to transmit in the previous cycle due to another station having the same priority level for its data but having a lower back-off time, will be able to access the medium faster in the next access cycle.
In an alternative embodiment, in the event of no legacy stations being present and therefore not taking part in the access scheme, the transmitted signal is modified to contain information about the duration of the transmission that is to follow. In this way the transmission of a signal to prolong the time period that stations decrement their counters during the EIFS period is avoided, as stations will know by the end of the prioritization phase when the medium will be free, because they will have detected that the medium is busy and exited the access cycle and from the detected signal their detection means will also have detected the information. This information contains the calculated time duration of the transmission by the station that has the highest priority. This duration includes the generated back-off time period, the actual time needed to transmit the data and time for acknowledgements to be received. Apart from the modification necessary to include the duration of the transmisssion in the signal transmitted, another modification necessary is to generate the random time value during the prioritization phase, as each station at that point of the access scheme needs to calculate the time of transmission in order to include it into the signal.

Fig. 4, shows the algorithm of the invention. At the beginning the station detects whether the medium is idle. If it is not, then it waits till it becomes idle. If it is idle it will wait for a time period equal to DIFS. Once this time period is over, the station enters into the prioritization phase and transmits a signal for a duration that depends on the priority level of the data waiting to be transmitted.The higher the priority level the longer the signal is transmitted for. Once the signal has been transmitted, the station wil detect whether the medium is busy or nor. If it is busy the station will resign from transmitting and exit the phase and wait for the next accessing cycle. If it is not busy, the station will wait for a time verification time slot, in order to check that there is no signal being transmitted. After this it then enters into the contention phase. The station will generate a random time value and then perform a back-off procedure. During the back-off procedure, the station still decrements its back-off counter and continues to detect for any transmissions on the medium, if it does detect then it resigns to transmit and exits until the next cycle. However in the next cycle, if the station wins the prioritization phase, i.e. the priority of the data it has is still the highest, it will continue to decrement its counter that was generated in the previous cycle, thus ensuring that high priority data does get access to the medium.
If it detects no transmission it will decrement its counter till it reaches a zero value and will then transmit its data. Once the station generates its random time value for the back-off procedure, a sub-process will calculate whether the sum of therandom time value and of the verification time slot is equal to or exceeds the predefined value of EIFS. If it does not, then the back-off counter is decremented until it reaches zero if no other transmission occurs and then the data is transmitted. If another transmission occurs then the station resigns and exits the cycle. If the calculated value is equal or higher to EIFS then the station will decrement its counter and transmit a signal for a duration of one slot on the 18^{th} time slot after the beginning of EIFS and then once again on the 18^{th} slot of that. If during this time period another transmission is heard on the medium the station resigns and exits the cycle, otherwise when the counter reaches zero it tranmsits its data.

The novel access mechanism implements a hierarchical independence but it is non-pre-emptive in that this activity is not allowed to interrupt a transmission once it has begun. Similar also to the use of VS, only the station that transmits for the longest time i.e. has the highest number of slots to transmit, will survive and see an empty VS. However, the difference to HIPERLAN type 1 (H/1), is that all stations immediately start to transmit at the same time after DIFS to avoid legacy terminals gaining access to the medium.

Furthermore, this novel access scheme has the following advantages:
- the signals allow prioritization of stations and supports a strict separation of traffic classes
- the scheme can be introduced seamlessly into the existing IEEE 802.11 standard without increasing the amount of overhead
- the scheme can co-exist with legacy IEEE 802.11 terminals
- the scheme allows for a better support of QoS requirements than IEEE 802.11e as it adapts to the dynamics of a network environment in a flexible manner by making use of the back-off scheme to avoid contention and at the same time retains separation of traffic classes.
- the scheme allows for a prioritized access in a distributed system without an infrastructure, and hence, provides QoS guarantees in self-organized networks (when admission control can be realized)
- the scheme introduces no additional overhead for operation of legacy terminals only (after DIFS the legacy terminals will start decrementing their backoff counter if no prioritized station is active), resulting in the max. possible throughput for legacy terminals.

In Fig. 5, a comparison between the IEEE 802.11e and the novel access scheme is presented. The saturation throughput S_high for the high priority traffic class (TC) for the new scheme is depicted for a packet length of tₚₖₜ = 1500 bytes. The 4-way handshaking mechanism with RTS/CTS and data acknowledgement has been used.
In order to better show the advantage of the scheme, the high priority curve of IEEE 802.11e has been added to the figure as a reference. (IEEE 802.11e supports three different traffic classes (TCs), however only the traffic class with the highest priority has been depicted as a reference). The stations supporting the high, medium and low priority traffic class use a contention window CW value of CW_{high} = 7, CW_{med} = 15 and CW_{low} = 31 respectively. As a parameter the number of stations with high (N_{high}) and low (N_{low}) priority have been changed from 1 to 19 and vice versa. For the calculations the number of stations supporting TCs with a medium priority was fixed to N_{med} = 5. The total number of stations was N = 25 for each iteration. For the new scheme the background traffic has no impact since the priority stations always gain access to the medium.
When the reference curve with squares and the throughput curve for the new scheme with CW = 7 (curve with rhombuses) are compared it can be clearly seen that for a low number of stations the new scheme performs much better. However, with increasing the number of high-priority stations the results of both schemes come closer. The reason for this is the contention between high-priority stations due to a lack of an adaptive back-off window. In both cases, the reference case and the novel scheme, the contention window has been set to a fixed value of CW = 7.
If the contention window is adapted (i.e. set to 15, as in the curve with triangles), the throughput is almost constant over the whole range of station numbers and the impact of increasing contention with increasing number of stations can be mitigated.
It can be seen, therefore from fig.4, that the novel scheme successfully separates high priority TCs from the effect of background traffic. Moreover, the scheme allows for the adapting of the CW for the back-off, depending on the number of stations competing for access in the same TC and still will not be affected by lower stations with lower priorities. Therefore, providing more than 100% capacity improvements for high-priority traffic streams over a wide range of station numbers.

Although the invention has been described in terms of the preferred embodiment described herein, those skilled in the art will appreciate other embodiments and modifications which can be made without departing from the scope of the teachings of the invention. All such modifications are intended to be included within the scope of the claims appended hereto.

## Claims

1. Method for managing the access of at least two stations that want to transmit data having different priority levels onto a transmission medium in a wireless network environment, comprising the steps of:
- detecting by the at least two stations whether the transmission medium is free;
- entering of the at least two stations into a prioritization phase, after having detected that the transmission medium is free, to gain access to a contention phase;
- entering of the at least two stations into the contention phase, to gain access to the medium;
- transmitting data by one of the at least two stations after having gained access to the medium; **characterised in that**,
- each one of the at least two stations during the prioritization phase transmits a signal whose duration depends on the priority level of the data to be transmitted.

2. Method according to claim 1, whereby the signal is any type of signal that can be generated and transmitted onto the medium.

3. Method according to claim 1, whereby the priority levels of the data correspond to quality of service requirements.

4. Method according to claim 1, whereby the at least two stations having detected that the transmission medium is free, wait for a time period before entering the prioritization phase.

5. Method according to claim 1, whereby the prioritization phase comprises of:
- transmitting the signal over a number of time slots by each station;
- detecting, by each station upon the end of its own signal transmission, whether the transmission medium is idle or not;
- upon detecting that the transmission medium is not idle, stations resign from transmitting data, exit the prioritization phase and wait for a next access cycle or;
- upon detecting that the transmission medium is idle, stations wait for one further time period, before entering the contention phase.

6. Method according to claim 1, whereby stations entering the contention phase generate a random time value.

7. Method according to claim 6, whereby stations entering into the contention phase, perform a back-off using the generated random time value.

8. Method according to claim 7, whereby the random time value is decremented until it reaches a zero value.

9. Method according to claim 8, whereby the first station reaching a zero time value will begin to transmit data onto the medium.

10. Method according to claim 9, whereby all other stations in the process of decrementing their corresponding time values, on detecting a transmission on the medium exit the contention phase and wait for a next access cycle.

11. Method according to claims 6 to 10, whereby when the generated time value exceeds a predetermined number of time slots, the station will transmit a further signal in the last but one time slot of the predetermined number of time slots and then again transmit a signal after that in the time slot that has a value equal to the value of the last but one time slot.

12. Method according to claim 11, whereby the predetermined number of time slots is equal to 19.

13. A system having means adapted to manage the access of at least two stations that want to transmit data having different priority levels onto a transmission medium in a wireless environment, whereby:
- the at least two stations have detection means adapted to detect whether the transmission medium is free;
- the at least two stations, once the transmission medium is detected as being free, have accessing means adapted to gain access to the transmission medium;
- one of the at least two stations, once having gained access to the transmission medium, has transmission means adapted to transmit data onto the medium; **characterised in that**,
- each one of the at least two stations, has signalling means adapted to transmit a signal whose duration depends on the priority level of the data to be transmitted.

14. System according to claim 13, whereby the signal is any type of signal that can be generated by signal generating means and transmitted by transmission means onto the medium.

15. System according to claim 13, whereby the at least two stations, once they have detected that the transmission medium is free, have timing means adapted to wait for a time period.

16. System according to claim 13, whereby:
- each station has transmitting means adapted to transmit a signal over a number of time slots;
- each station has detecting means adapted to detect, upon the end of its own signal transmission, whether the transmission medium is idle or not;
- upon detecting that the transmission medium is not idle, stations have resignation means adapted to resign from transmitting data and exiting means adapted to exit and wait for the next access cycle or;
- upon detecting that the transmission medium is idle, stations have timing means adapted to wait for one further time period, before generating means on each station adapted to generate a random time value, generate the random value.

17. System according to claim 16, whereby the generated random time value is used by accessing means adapted to perform a back-off.

18. System according to claim 17, whereby decrementing means decrement the random time value until a zero value is reached.

19. System according to claim 18, whereby the first station whose decrementing means decrement the random value to zero, has transmitting means adapted to begin data transmission onto the transmission medium.

20. System according to claim 19, whereby all other stations whose decrementing means are still decrementing the random time value, have detection means adapted to detect a transmission on the transmission medium and have exiting means adapted to exit and wait for a next access cycle.

21. System according to claim 20, whereby stations have calculating means adapted to calculate whether the generated time value exceeds a predetermined number of time slots and when it does the stations have signalling means adapted to transmit a further signal in the in the last but one time slot of the predetermined number of time slots and then again to transmit a signal after that in the time slot that has a value equal to the value of the last but one time slot.

22. System according to claim 21, whereby the predetermined number of time slots that the calculating means are adapted to use in their calculation is equal to 19.

23. A station having access means adapted to gain access of a transmission medium, when it wants to transmit data having different priority levels, in a wireless environment, whereby:
- the station has detection means adapted to detect whether the transmission medium is free;
- the station, once the transmission medium has been detected as being free, has accessing means adapted to gain access to the transmission medium;
- the station, once it has gained access to the transmission medium, has transmitting means adapted to transmit data onto the transmission medium; **characterised in that**,
- the station has signalling means adapted to transmit a signal whose duration depends on the priority level of the data to be transmitted.

24. A station according to claim 23, whereby the signal is any type of signal that can be generated by signal generating means and transmitted by transmission means onto the medium.

25. A station according to claim 23, whereby the station, once it has detected that the transmission medium is free, has timing means adapted to wait for a time period.

26. A station according to claim 23, whereby
- the station has transmitting means adapted to transmit the signal over a number of time slots;
- the station has detecting means adapted to detect, upon the end of its own signal transmission, whether the transmission medium is idle or not;
- upon detecting that the transmission medium is not idle, the station has resignation means adapted to resign from transmitting data and exiting means adapted to exit and wait for the next access cycle or;
- upon detecting that the transmission medium is idle, the station has timing means adapted to wait for one further time period, before generating means on the station adapted to generate a random time value, generate the random time value.

27. A station according to claim 26, whereby the generated random time value is used by accessing means adapted to perform a back-off.

28. A station according to claim 27, whereby decrementing means decrement the random time value until a zero value is reached.

29. A station according to claim 28, whereby the station whose decrementing means decrement the random value to zero, has transmitting means adapted to begin data transmission onto the transmission medium.

30. A station according to claim 29, whereby a station whose decrementing means are still decrementing the random time value, has detection means adapted to detect a transmission on the transmission medium and has exiting means adapted to exit and wait for a next access cycle.

31. A station according to claims 26 to 30, whereby the station has calculating means adapted to calculate whether the generated time value exceeds a predetermined number of time slots and when it does the station has signalling means adapted to transmit a further signal in the in the last but one time slot of the predetermined number of time slots and then again to transmit a signal after that in the time slot that has a value equal to the value of the last but one time slot.

32. A station according to claim 31, whereby the predetermined number of time slots that the calculating means are adapted to use in their calculation is equal to 19.

## Patentansprüche

1. Verfahren zur Verwaltung des Zugriffs von mindestens zwei Stationen, die Daten übertragen wollen, welche unterschiedliche Prioritätsstufen aufweisen, auf ein Übertragungsmedium in einer drahtlosen Netzumgebung, welches die folgenden Schritte umfasst:
- Erkennen durch die mindestens zwei Stationen, ob das Übertragungsmedium frei ist;
- Eintreten der mindestens zwei Stationen in eine Prioritätsfindungsphase ("Prioritization"), nachdem sie erkannt haben, dass das Übertragungsmedium frei ist, um Zugang zu einer Wettbewerbsphase ("Contention") zu erlangen;
- Eintreten der mindestens zwei Stationen in die Wettbewerbsphase, um Zugriff auf das Übertragungsmedium zu erhalten;
- Übertragen der Daten durch eine der mindestens zwei Stationen, nachdem sie Zugriff auf das Übertragungsmedium erhalten hat; **dadurch gekennzeichnet, dass**
- jede der mindestens zwei Stationen während der Prioritätsfindungsphase ein Signal sendet, dessen Dauer von der Prioritätsstufe der Daten abhängt, die übertragen werden sollen.

2. Verfahren gemäß Anspruch 1, bei dem das Signal ein Signal eines beliebigen Typs ist, das generiert und auf dem Übertragungsmedium übertragen werden kann.

3. Verfahren gemäß Anspruch 1, bei dem die Prioritätsstufen der Daten den Anforderungen an die Quality of Service (QoS) entsprechen.

4. Verfahren gemäß Anspruch 1, bei dem die mindestens zwei Stationen, wenn sie erkannt haben, dass das Übertragungsmedium frei ist, einen Zeitraum abwarten, bevor sie in die Prioritätsfindungsphase eintreten.

5. Verfahren gemäß Anspruch 1, bei dem die Prioritätsfindungsphase folgende Schritte umfasst:
- Senden des Signals über eine Anzahl von Zeitschlitzen durch jede Station;
- Erkennen, durch jede Station am Ende ihrer eigenen Signalübertragung, ob das Übertragungsmedium frei ist oder nicht;
- bei Erkennen, dass das Übertragungsmedium nicht frei ist, verzichten die Stationen auf das Senden von Daten, beenden die Prioritätsfindungsphase und warten einen nächsten Kanalzugriffszyklus ab; oder
- bei Erkennen, dass das Übertragungsmedium frei ist, warten die Stationen einen weiteren Zeitraum ab, bevor sie die Wettbewerbsphase beginnen.

6. Verfahren gemäß Anspruch 1, bei dem die Stationen, die in die Wettbewerbsphase eintreten, einen zufälligen Zeitwert generieren.

7. Verfahren gemäß Anspruch 6, bei dem die Stationen, die in die Wettbewerbsphase eintreten, anhand des generierten zufälligen Zeitwertes eine Backoff-Prozedur ausführen.

8. Verfahren gemäß Anspruch 7, bei dem der zufällige Zeitwert so lange heruntergezählt wird, bis er einen Wert "Null" erreicht.

9. Verfahren gemäß Anspruch 8, bei dem die erste Station, die einen Zeitwert von "Null" erreicht, mit der Übertragung von Daten auf dem Übertragungsmedium beginnt.

10. Verfahren gemäß Anspruch 9, bei dem alle anderen Stationen, die den Prozess des Herunterzählens ihrer entsprechenden Zeitwerte ausführen, bei Erkennen einer Übertragung auf dem Übertragungsmedium die Wettbewerbsphase verlassen und einen nächsten Kanalzugriffszyklus abwarten.

11. Verfahren gemäß den Ansprüchen 6 bis 10, bei dem, wenn der generierte Zeitwert eine vorab definierte Anzahl von Zeitschlitzen übersteigt, die Station ein weiteres Signal in dem vorletzten Zeitschlitz der vorab definierten Anzahl von Zeitschlitzen sendet und danach nochmals ein Signal nach demjenigen in dem Zeitschlitz sendet, der einen Wert gleich dem Wert des vorletzten Zeitschlitzes hat.

12. Verfahren gemäß Anspruch 11, bei dem die vorab definierte Anzahl von Zeitschlitzen gleich 19 ist.

13. System, welches Mittel aufweist, die dafür ausgelegt sind, den Zugriff von mindestens zwei Stationen, die Daten übertragen wollen, welche unterschiedliche Prioritätsstufen aufweisen, auf ein Übertragungsmedium in einer drahtlosen Netzumgebung zu verwalten, wobei:
- die mindestens zwei Stationen über Erkennungsmittel verfügen, die dafür ausgelegt sind zu erkennen, ob das Übertragungsmedium frei ist;
- die mindestens zwei Stationen, sobald das Übertragungsmedium als frei erkannt worden ist, über Zugriffsmittel verfügen, die dafür ausgelegt sind, Zugriff auf das Übertragungsmedium zu erlangen;
- eine der mindestens zwei Stationen, sobald sie Zugriff auf das Übertragungsmedium erlangt hat, über Übertragungsmittel verfügt, die dafür ausgelegt sind, Daten auf dem Übertragungsmedium zu übertragen; **dadurch gekennzeichnet, dass**
- jede der mindestens zwei Stationen über Signalisierungsmittel verfügt, die dafür ausgelegt sind, ein Signal zu senden, dessen Dauer von der Prioritätsstufe der Daten abhängt, die übertragen werden sollen.

14. System gemäß Anspruch 13, bei dem das Signal ein Signal eines beliebigen Typs ist, das von einem Signalerzeugungsmittel generiert und durch ein Übertragungsmittel auf dem Übertragungsmedium übertragen werden kann.

15. System gemäß Anspruch 13, bei dem mindestens zwei Stationen, wenn sie erkannt haben, dass das Übertragungsmedium frei ist, über Zeitmessungsmittel verfügen, die dafür ausgelegt sind, einen Zeitraum abzuwarten.

16. System gemäß Anspruch 13, bei dem:
- jede Station über Übertragungsmittel verfügt, die dafür ausgelegt sind, ein Signal über eine Anzahl von Zeitschlitzen zu senden;
- jede Station über Erkennungsmittel verfügt, die dafür ausgelegt sind, am Ende ihrer eigenen Signalübertragung zu erkennen, ob das Übertragungsmedium frei ist oder nicht;
- bei Erkennen, dass das Übertragungsmedium nicht frei ist, die Stationen über Rückzugsmittel verfügen, die dafür ausgelegt sind, sich aus dem Senden von Daten zurückzuziehen, sowie über Beendigungsmittel, die dafür ausgelegt sind, den Vorgang zu beenden und auf den nächsten Kanalzugriffszyklus zu warten; oder
- bei Erkennen, dass das Übertragungsmedium frei ist, die Stationen über Zeitmessungsmittel verfügen, die dafür ausgelegt sind, einen weiteren Zeitraum abzuwarten, bevor Erzeugungsmittel an jeder Station, die dafür ausgelegt ist, einen zufälligen Zeitwert zu generieren, den zufälligen Zeitwert generieren.

17. System gemäß Anspruch 16, bei dem der generierte zufällige Zeitwert von Zugriffsmitteln verwendet wird, die dafür ausgelegt sind, eine Backoff-Prozedur auszuführen.

18. System gemäß Anspruch 17, bei dem Herunterzählmittel den zufälligen Zeitwert so lange herunterzählen, bis er einen Wert "Null" erreicht.

19. System gemäß Anspruch 18, bei dem die erste Station, deren Herunterzählmittel den zufälligen Zeitwert auf "Null" herunterzählt, über Übertragungsmittel verfügt, die dafür ausgelegt sind, mit der Datenübertragung auf dem Übertragungsmedium zu beginnen.

20. System gemäß Anspruch 19, bei dem alle anderen Stationen, deren Herunterzählmittel fortfahren, den zufälligen Zeitwert herunterzuzählen, über Erkennungsmittel verfügen, die dafür ausgelegt sind, eine Übertragung auf dem Übertragungsmedium zu erkennen, und über Beendigungsmittel verfügen, die dafür ausgelegt sind, den Vorgang zu beenden und den nächsten Kanalzugriffszyklus abzuwarten.

21. System gemäß Anspruch 20, bei dem die Stationen über Berechnungsmittel verfügen, die dafür ausgelegt sind zu berechnen, ob der generierte Zeitwert eine vorab definierte Anzahl von Zeitschlitzen übersteigt, und, wenn dies der Fall ist, die Stationen über Signalisierungsmittel verfügen, die dafür ausgelegt sind, ein weiteres Signal in dem vorletzten Zeitschlitz der vorab definierten Anzahl von Zeitschlitzen zu senden und danach nochmals ein Signal nach demjenigen in dem Zeitschlitz zu senden, der einen Wert gleich dem Wert des vorletzten Zeitschlitzes hat.

22. Verfahren gemäß Anspruch 21, bei dem die vorab definierte Anzahl der Zeitschlitze, für deren Verwendung in den Berechnungen die Berechnungsmittel ausgelegt sind, gleich 19 ist.

23. Station, die über Zugriffsmittel verfügt, die dafür ausgelegt sind, Zugriff auf ein Übertragungsmedium zu erlangen, wenn die Station Daten übertragen will, die unterschiedliche Prioritätsstufen haben, in einer drahtlosen Umgebung, wobei:
- die Station über Erkennungsmittel verfügt, die dafür ausgelegt sind, zu erkennen, ob ein Übertragungsmedium frei ist;
- die Station, sobald das Übertragungsmedium als frei erkannt worden ist, über Zugriffsmittel verfügt, die dafür ausgelegt sind, Zugriff auf das Übertragungsmedium zu erlangen;
- die Station, sobald sie Zugriff auf das Übertragungsmedium erlangt hat, über Übertragungsmittel verfügt, die dafür ausgelegt sind, Daten auf dem Übertragungsmedium zu übertragen; **dadurch gekennzeichnet, dass**
- die Station über Signalisierungsmittel verfügt, die dafür ausgelegt sind, ein Signal zu senden, dessen Dauer von der Prioritätsstufe der Daten abhängt, die übertragen werden sollen.

24. Station gemäß Anspruch 23, bei der das Signal ein Signal eines beliebigen Typs ist, das von einem Signalerzeugungsmittel generiert und durch ein Übertragungsmittel auf dem Übertragungsmedium übertragen werden kann.

25. Station gemäß Anspruch 23, bei der die Station, wenn sie erkannt hat, dass das Übertragungsmedium frei ist, über Zeitmessungsmittel verfügt, die dafür ausgelegt sind, einen Zeitraum abzuwarten.

26. Station gemäß Anspruch 23, bei der:
- die Station über Übertragungsmittel verfügt, die dafür ausgelegt sind, ein Signal über eine Anzahl von Zeitschlitzen zu senden;
- die Station über Erkennungsmittel verfügt, die dafür ausgelegt sind, am Ende ihrer eigenen Signalübertragung zu erkennen, ob das Übertragungsmedium frei ist oder nicht;
- bei Erkennen, dass das Übertragungsmedium nicht frei ist, die Station über Rückzugsmittel verfügt, die dafür ausgelegt sind, sich aus dem Senden von Daten zurückzuziehen, sowie über Beendigungsmittel, die dafür ausgelegt sind, den Vorgang zu beenden und auf den nächsten Kanalzugriffszyklus zu warten; oder
- bei Erkennen, dass das Übertragungsmedium frei ist, die Station über Zeitmessungsmittel verfügt, die dafür ausgelegt sind, einen weiteren Zeitraum abzuwarten, bevor Erzeugungsmittel an der Station, die dafür ausgelegt sind, einen zufälligen Zeitwert zu generieren, den zufälligen Zeitwert generieren.

27. Station gemäß Anspruch 26, bei der der generierte zufällige Zeitwert von Zugriffsmitteln verwendet wird, die dafür ausgelegt sind, eine Backoff-Prozedur auszuführen.

28. Station gemäß Anspruch 27, bei der Herunterzählmittel den zufälligen Zeitwert so lange herunterzählen, bis ein Wert "Null" erreicht ist.

29. Station gemäß Anspruch 28, bei der die Station, deren Herunterzählmittel den zufälligen Zeitwert auf "Null" herunterzählen, über Übertragungsmittel verfügt, die dafür ausgelegt sind, mit der Datenübertragung auf dem Übertragungsmedium zu beginnen.

30. Station gemäß Anspruch 29, bei der eine Station, deren Herunterzählmittel fortfahren, den zufälligen Zeitwert herunterzuzählen, über Erkennungsmittel verfügt, die dafür ausgelegt sind, eine Übertragung auf dem Übertragungsmedium zu erkennen, und über Beendigungsmittel verfügt, die dafür ausgelegt sind, den Vorgang zu beenden und den nächsten Kanalzugriffszyklus abzuwarten.

31. Station gemäß den Ansprüchen 26 bis 30, bei der die Station über Berechnungsmittel verfügt, die dafür ausgelegt sind zu berechnen, ob der generierte Zeitwert eine vorab definierte Anzahl von Zeitschlitzen übersteigt, und, wenn dies der Fall ist, die Station über Signalisierungsmittel verfügt, die dafür ausgelegt sind, ein weiteres Signal in dem vorletzten Zeitschlitz der vorab definierten Anzahl von Zeitschlitzen zu senden und danach nochmals ein Signal nach demjenigen in dem Zeitschlitz zu senden, der einen Wert gleich dem Wert des vorletzten Zeitschlitzes hat.

32. Station gemäß Anspruch 31, bei der die vorab definierte Anzahl der Zeitschlitze, für deren Verwendung in den Berechnungen die Berechnungsmittel ausgelegt sind, gleich 19 ist.

## Revendications

1. Procédé de gestion de l'accès d'au moins deux stations qui souhaitent transmettre des données ayant des niveaux de priorité différents sur un support de transmission dans un environnement de réseau sans fil, comprenant les étapes consistant à:
- détecter par les au moins deux stations si le support de transmission est libre;
- entrer des au moins deux stations dans une phase d'établissement des priorités, après avoir détecté que le support de transmission est libre, pour accéder à une phase de contention;
- entrer des au moins deux stations dans la phase de contention, pour avoir accès au support;
- transmettre des données par l'une des au moins deux stations après avoir eu accès au support; **caractérisé en ce que**,
- chacune des au moins deux stations transmet un signal, pendant la phase d'établissement des priorités, dont la durée dépend du niveau de priorité des données à transmettre.

2. Procédé selon la revendication 1, dans lequel le signal est d'un type quelconque de signal pouvant être généré et transmis sur le support.

3. Procédé selon la revendication 1, dans lequel les niveaux de priorité des données correspondent aux exigences de qualité de service.

4. Procédé selon la revendication 1, dans lequel les au moins deux stations ayant détecté que le support de transmission est libre attendent pendant une certaine durée avant d'entrer en phase d'établissement des priorités.

5. Procédé selon la revendication 1, dans lequel la phase d'établissement des priorités comprend :
- la transmission du signal sur un nombre de créneaux de temps par chaque station;
- la détection, par chaque station à la fin de la transmission de son propre signal, si le support de transmission est inoccupé ou non;
- lors de la détection que le support de transmission n'est pas inoccupé, les stations renoncent à transmettre les données, sortent de la phase d'établissement des priorités et attendent un cycle d'accès suivant ou;
- lors de la détection que le support de transmission est inoccupé, les stations attendent pendant une autre durée avant d'entrer en phase de contention.

6. Procédé selon la revendication 1, dans lequel les stations entrant en phase de contention génèrent une valeur de temps aléatoire.

7. Procédé selon la revendication 6, dans lequel les stations entrant en phase de contention effectuent une réduction de puissance au moyen de la valeur de temps aléatoire générée.

8. Procédé selon la revendication 7, dans lequel la valeur de temps aléatoire est décrémentée jusqu'à ce qu'elle atteigne une valeur nulle.

9. Procédé selon la revendication 8, dans lequel la première station atteignant une valeur de temps nulle commencera à transmettre des données sur le support.

10. Procédé selon la revendication 9, dans lequel toutes les autres stations, en cours de procédé de décrémentation de leurs valeurs de temps correspondantes, sortent de la phase de contention et attendent un cycle d'accès suivant lors de la détection d'une transmission sur le support.

11. Procédé selon les revendications 6 à 10, dans lequel, lorsque la valeur de temps générée dépassera un nombre prédéterminé de créneaux de temps, la station transmettra un autre signal dans l'avant-dernier créneau de temps du nombre prédéterminé de créneaux de temps et retransmettra ensuite un signal après celui dans le créneau de temps qui a une valeur égale à la valeur de l'avant-dernier créneau de temps.

12. Procédé selon la revendication 11, dans lequel le nombre prédéterminé de créneaux de temps est égal à 19.

13. Système ayant des moyens conçus pour gérer l'accès d'au moins deux stations qui souhaitent transmettre des données ayant des niveaux de priorité différents sur un support de transmission dans un environnement sans fil, dans lequel :
- les au moins deux stations comportent des moyens de détection conçus pour détecter si le support de transmission est libre;
- les au moins deux stations comportent, une fois que le support de transmission a été détecté comme étant libre, des moyens d'accès conçus pour avoir accès au support de transmission;
- l'une des au moins deux stations comporte, une fois qu'elle a eu accès au support de transmission, des moyens de transmission conçus pour transmettre des données sur le support; **caractérisé en ce que**,
- chacune des au moins deux stations comporte des moyens de signalisation conçus pour transmettre un signal dont la durée dépend du niveau de priorité des données à transmettre.

14. Système selon la revendication 13, dans lequel le signal est un type quelconque de signal pouvant être généré par des moyens de production de signal et transmis par des moyens de transmission sur le support.

15. Système selon la revendication 13, dans lequel les au moins deux stations, une fois qu'elles ont détecté que le support de transmission est libre, comportent des moyens de temporisation conçus pour attendre pendant une certaine durée.

16. Système selon la revendication 13, dans lequel :
- chaque station comporte des moyens de transmission conçus pour transmettre un signal sur un nombre de créneaux de temps;
- chaque station comporte des moyens de détection conçus pour détecter, à la fin de la transmission de son propre signal, si le support de transmission est inoccupé ou non;
- lors de la détection que le support de transmission n'est pas inoccupé, les stations comportent des moyens de renonciation conçus pour renoncer à transmettre les données et des moyens de sortie conçus pour sortir et attendre le cycle d'accès suivant ou;
- lors de la détection que le support de transmission est inoccupé, les stations comportent des moyens de temporisation conçus pour attendre pendant une autre durée, avant que les moyens de production sur chaque station, conçus pour générer une valeur de temps aléatoire, génèrent la valeur aléatoire.

17. Système selon la revendication 16, dans lequel la valeur de temps aléatoire générée est utilisée par les moyens d'accès conçus pour effectuer une réduction de puissance.

18. Système selon la revendication 17, dans lequel des moyens de décrémentation décrémentent la valeur de temps aléatoire jusqu'à ce qu'une valeur nulle soit atteinte.

19. Système selon la revendication 18, dans lequel la première station, dont les moyens de décrémentation décrémentent la valeur aléatoire à zéro, comporte des moyens de transmission conçus pour commencer la transmission des données sur le support de transmission.

20. Système selon la revendication 19, dans lequel toutes les autres stations, dont les moyens de décrémentation décrémentent toujours la valeur de temps aléatoire, comportent des moyens de détection conçus pour détecter une transmission sur le support de transmission et comportent des moyens de sortie conçus pour sortir et attendre un cycle d'accès suivant.

21. Système selon la revendication 20, dans lequel les stations comportent des moyens de calcul conçus pour calculer si la valeur de temps générée dépasse un nombre prédéterminé de créneaux de temps et lorsque c'est le cas, les stations comportent des moyens de signalisation conçus pour transmettre un autre signal dans l'avant-dernier créneau de temps du nombre prédéterminé de créneaux de temps et pour retransmettre ensuite un signal après celui dans le créneau de temps qui a une valeur égale à la valeur de l'avant-dernier créneau de temps.

22. Système selon la revendication 21, dans lequel le nombre prédéterminé de créneaux de temps, que les moyens de calcul sont aptes à utiliser dans leur calcul, est égal à 19.

23. Station ayant des moyens d'accès conçus pour avoir accès à un support de transmission, lorsqu'elle souhaite transmettre des données ayant des niveaux de priorité différents, dans un environnement sans fil, dans laquelle :
- la station comporte des moyens de détection conçus pour détecter si le support de transmission est libre;
- la station, une fois que le support de transmission a été détecté comme étant libre, comporte des moyens d'accès conçus pour avoir accès au support de transmission;
- la station, une fois qu'elle a obtenu l'accès au support de transmission, comporte des moyens de transmission conçus pour transmettre des données sur le support de transmission;
**caractérisée en ce que**,
- la station comporte des moyens de signalisation conçus pour transmettre un signal dont la durée dépend du niveau de priorité des données à transmettre.

24. Station selon la revendication 23, dans laquelle le signal est un type quelconque de signal pouvant être généré par des moyens de production de signal et transmis par des moyens de transmission sur le support.

25. Station selon la revendication 23, dans laquelle la station, une fois qu'elle a détecté que le support de transmission est libre, comporte des moyens de temporisation conçus pour attendre pendant une certaine durée.

26. Station selon la revendication 23, dans laquelle
- la station comporte des moyens de transmission conçus pour transmettre le signal sur un nombre de créneaux de temps;
- la station comporte des moyens de détection conçus pour détecter, à la fin de la transmission de son propre signal, si le support de transmission est inoccupé ou non;
- lors de la détection que le support de transmission n'est pas inoccupé, la station comporte des moyens de renonciation conçus pour renoncer à transmettre les données et des moyens de sortie conçus pour sortir et attendre le cycle d'accès suivant ou;
- lors de la détection que le support de transmission est inoccupé, la station comporte des moyens de temporisation conçus pour attendre pendant une autre durée, avant que les moyens de production sur la station conçus pour générer une valeur de temps aléatoire génèrent la valeur de temps aléatoire.

27. Station selon la revendication 26, dans laquelle la valeur de temps aléatoire générée est utilisée par les moyens d'accès conçus pour effectuer une réduction de puissance.

28. Station selon la revendication 27, dans laquelle des moyens de décrémentation décrémentent la valeur de temps aléatoire jusqu'à ce qu'une valeur nulle soit atteinte.

29. Station selon la revendication 28, dans laquelle la station, dont les moyens de décrémentation décrémentent la valeur aléatoire à zéro, comporte des moyens de transmission conçus pour commencer la transmission des données sur le support de transmission.

30. Station selon la revendication 29, dans laquelle une station, dont les moyens de décrémentation décrémentent toujours la valeur de temps aléatoire, comporte des moyens de détection conçus pour détecter une transmission sur le support de transmission et comporte des moyens de sortie conçus pour sortir et attendre un cycle d'accès suivant.

31. Station selon les revendications 26 à 30, dans laquelle la station comporte des moyens de calcul conçus pour calculer si la valeur de temps générée dépasse un nombre prédéterminé de créneaux de temps et lorsque c'est le cas, la station comporte des moyens de signalisation conçus pour transmettre un autre signal dans l'avant-dernier créneau de temps du nombre prédéterminé de créneaux de temps et pour retransmettre ensuite un signal après celui dans le créneau de temps qui a une valeur égale à la valeur de l'avant-dernier créneau de temps.

32. Station selon la revendication 31, dans laquelle le nombre prédéterminé de créneaux de temps, que les moyens de calcul sont aptes à utiliser dans leur calcul, est égal à 19.
